# EUROPÄISCHE PATENTSCHRIFT

(11) **EP 0 629 474 B1**
(45) Veröffentlichungstag und Bekanntmachung des Hinweises auf die Patenterteilung: **03.09.1997**
(21) Anmeldenummer: 93115596.4
(22) Anmeldetag: 28.09.1993
(51) Int. Cl.: B25B 27/30

(54) **Federspannvorrichtung**
Spring tensioning apparatus
Dispositif compresseur de ressort hélicoidal

(30) Priorität: 15.06.1993 DE 9308869 U
(43) Veröffentlichungstag der Anmeldung: 21.12.1994
(73) Patentinhaber: Weitner, Werner, D-85072 Eichstätt (DE)
(72) Erfinder: Weitner, Werner, D-85072 Eichstätt (DE)
(74) Vertreter: Sasse, Volker, Dipl.-Ing.

(56) Entgegenhaltungen:
- GB-A- 2 261 185
- US-A- 4 641 814
- US-A- 4 785 519
- US-A- 5 172 462
- US-A- 5 172 889

## Beschreibung

Die Erfindung bezieht sich auf eine Federspannvorrichtung zum Spannen einer Schraubenfeder, insbesondere von Federbeinen, nach dem Oberbegriff des Hauptanspruchs.1

Federbeine werden u.a. in Kraftfahrzeugen unterschiedlicher Bauart und Größe verwendet, um die beim Fahren aufgrund des Straßenbelags auftretenden Schwingungen durch Stöße zu dämpfen. Hierfür werden in der Regel Schraubenfedern verwendet, deren Länge, Durchmesser, Federdrahtstärke und -querschnittsform je nach Fahrzeuggröße und Benutzungsart stark variiert.

Wie bei allen mechanischen Teilen ist die Lebensdauer auch einer Schraubenfeder z.B. eines Federbeins oder das Federbein bzw. der Stoßdämpfer selbst aus mancherlei Gründen begrenzt, so daß ihr Austausch erforderlich wird.

Für diesen Austausch wird eine Vorrichtung verwendet, die die Schraubenfeder zusammenpreßt, um danach ein Entfernen des durch die Schraubenfeder schwingungsdämpfend gehaltenen Bauteils, z.B. eines Federbeins oder eines Stoßdämpfers, zu ermöglichen.

Die Größe dieser Vorrichtung muß den Abmessungen und Federkräften der Schraubenfeder zugeordnet werden. Die Werkstätten waren daher gezwungen, eine entsprechende Anzahl unterschiedlicher Vorrichtungsgrößen bereitzuhalten, um erforderliche Reparaturen in jedem Fall ausführen zu können. Außerdem konnten diese bekannten Vorrichtungen ein Hersusspringen der gespannten Schraubenfeder aus der Vorrichtung nicht mit Sicherheit verhindern.

Aus der US 4 785 519 ist eine Vorrichtung zum Spannen von Schraubenfedern bekannt, die von zwei Führungsstangen und einer zwischen ihnen vorgesehenen feststehende Gewindespindel gebildet ist. Ein Ende der Gewindespindel ist mit einem Quersteg gelenkig verbunden, an dessen Enden über eine Langloch-Bolzenverbindung je ein Führungsschuh angelenkt ist. Die Führungsschuhe sind entlang der Führungsstangen gleitend geführt und tragen jeweils eine Spannklaue, die ein Ende der zu spannenden Feder ergreift. Das Gegenende der Feder ist von zwei weiteren ebenfalls an den Führungsstangen verschiebbar gehaltenen Spannklauen gehalten.

Aus der GB 2 261 185 A ist eine weitere Vorrichtung zum Spannen einer Schraubenfeder bekannt. Diese wird von einer drehbar in einem Rahmen gehaltenen Gewindespindel gebildet, an der ein hufeisenförmiger Federhalter verschiebbar gehalten ist. Dieser Federhalter ist über einen Bolzen schwenkbar an einem Block gehalten, der eine Bohrung mit einem Innengewinde aufweist, die von der Gewindespindel durchdrungen ist. Der Block ist an einer Rückwand des Rahmens gleitend geführt, so daß ein Mitdrehen des Blocks mit der Gewindespindel ausgeschlossen ist.

Der Anmelder hat sich daher die Aufgabe gestellt, eine Federspannvorrichtung zu schaffen, die unabhängig von Größe und Spannkräften der Schraubenfeder verwendet werden kann und ohne größeren Kraftaufwand leicht zu betätigen ist.

Zur Lösung dieser Aufgabe schlägt sie eine Federspannvorrichtung mit den im Anspruch 1 aufgeführten Merkmalen vor.

Durch Verwenden einer Schraubspindel zwischen zwei Führungsstangen wird ein Verkanten beim Verschieben des betreffenden Federhalters vermieden. Da die beiden Führungsstangen lediglich Führungsaufgaben für eine mit dem verschiebbaren Federhalter verbundene Führungsplatte haben, brauchen sie für keine andere Aufgabe ausgebildet und bemessen zu werden. Die Schraubspindel wiederum, die einerseits in einer die beiden Führungsstangen verbindenden Fußplatte und andererseits in einer die beiden Führungsstangen verbindenden Deckenplatte drehbar angeordnet ist und über ein Innengewinde in der Führungsplatte die eingespannte Schraubenfeder zusammenpreßt oder entspannt, wird nur für das Zusammenpressen der Schraubenfeder - auch hinsichtlich ihrer Gewindeausbildung - ausgelegt. Um ein Herausspringen der Schraubenfeder aus der Spannvorrichtung zu verhindern, genügt es in der Regel, wenn die Federhalter so ausgebildet sind, daß sie den Umfang der zwischen ihnen eingespannten Schraubenfeder mindestens 180° weit umfassen. Dies wird dadurch unterstützt, daß mindestens einer der beiden Federhalter so angeordnet ist, daß er sich der Federsteigung anpaßt.

Vorteilhafte Einzelheiten der erfindungsgemäßen Vorrichtung sind in den kennzeichnenden Teilen der Unteransprüche angegeben.

So wird ein Verkanten bei Verschieben des betreffenden Federhalters noch sicherer vermieden, wenn die Schraubspindel mittig zwischen den beiden Führungsstangen angeordnet ist.

Um die Schraubspindel auf einfache Weise drehen zu können, ist es vorteilhaft, wenn sie aus der Fußplatte oder der Deckenplatte so weit herausragt, daß sie an diesem Ende eine Ausbildung zur Aufnahme eines Drehwerkzeugs aufweist.

Für die große Belastung der Schraubspindel ist es günstig, ein vergütetes Trapezgewinde zu wählen, das eine lange Funktionsdauer gewährleistet.

Dem Anpassen an die Schraubenfedersteigung dient die Maßnahme, mindestens einen Federhalter in Umfangsrichtung geteilt auszubilden, wobei die Teilung vor allem in zwei gleich lange Teile erfolgen sollte, die gelenkig miteinander - gegebenenfalls über ein Zwischenstück - verbunden sind. Diese Anpassung der Federhalter an die unterschiedlichen Federdurchmesser vereinfacht das Gerät, macht es universell für jede Federgröße und verringert die Lagerhaltung von Vorrichtungsteilen.

Um die Federhalter möglichst kostengünstig und doch für unterschiedlich dimensionierte Schraubenfedern geeignet auzubilden, sollten sie Spannklauen zur Aufnahme des Federdrahtes bzw. der Schraubenfederabdeckung aufweisen. Wenn diese Spannklauen insbesondere schwenkbar und/oder verstellbar an den freien Enden des Federhalters angebracht sind, können sie besonders gut für die jeweilige Schraubenfeder und deren Steigung eingestellt werden. Dabei hat es sich besonders vorteilhaft erwiesen, wenn die Merkmale des Anspruchs 10 zur Anwendung kommen. Durch die plattenartige Ausbildung der freien Enden ist der Bereich für die Befestigungslage der Spannklauen variabler und kann an jee Federgröße angepaßt werden.

Dem Anpassen an die unterschiedlichen Schraubenfederdrahtquerschnitte dient die Maßnahme, daß die Spannklauen mindestens eines Federhalters einen U-förmigen Querschnitt aufweisen. Vorteilhaft ist ferner, wenn diese U-förmige Spannklaue in ihrer Längsrichtung gebogen ausgeführt ist. Wenn dabei die freien Schenkel im U-förmigen Querschnitt der Spannklaue so hoch ausgebildet sind, daß sie zur Aufnahme von mindestens zwei unterschiedlichen Steigungsbereichen einer entspannten Schraubenfeder geeignet sind, dient dies zum besseren Halten der Feder und gegen das Ausbiegen.

Da ein Herausspringen der Schraubenfeder aus der Spannvorrichtung eine Gefährdung der in der Nähe befindlichen Monteure bedeutet, sollte dies auch bei ungünstigsten Werkstattbedingungen auf jeden Fall verhindert werden. Deshalb weist mindestens der verschiebbare Federhalter einen an seinen freien Enden festlegbaren Halteteil auf, der um die eingespannte Feder herumfaßt und diese gegen ein Herausspringen sichert. Dieser Halteteil ist ein aufklappbarer Arm, der an dem einen freien Ende des Federhalters gelenkig festgelegt ist und an dem anderen freien Ende verriegelt wird. Dieser Arm weist an dem verriegelten Ende mehrere in Reihe gesetzte Bohrungen auf, um in unterschiedlicher Länge festgelegt zu werden. Alternativ ist der Arm zweiteilig ineinanderschiebbar ausgebildet und bietet so die gewünschte unterschiedliche Länge. Es ist aber auch daran gedacht, das Halteteil als Sicherungskette auszubilden, die mindestens an ihrem einen Ende an das freie Ende des zugeordneten Federhalters einhängbar ist und am anderen Ende festliegt. Dabei kann die Nutzlänge der Sicherheitskette wegen der unterschiedlichen Schraubenfederdurchmesser - auf unterschiedliche Weise - verstellbar und einstellbar sein.

Um die neuerungsgemäße Spannvorrichtung auch außerhalb der Schraubenfeder-Einbaustelle anwenden zu können, benötigt sie eine Verlängerung in Achsrichtung durch eine Stützeinrichtung, die zum Befestigen z.B. in einem Schraubstock dienen kann. Darüber hinaus kann die Stützeinrichtung an ihrem freien Ende einen Fuß zum Aufstellen der Spannvorrichtung aufweisen.

Es ist vorteilhaft, wenn die Stützeinrichtung zwischen ihrem Fuß und dem unteren Federhalter ein Fangblech zur Aufnahme eines von der Schraubenfeder gehaltenen Bauteils aufweist, damit dieses beim Hantieren mit der Schraubenfeder nicht herunterfällt und dabei gegebenenfalls beschädigt wird.

Die Erfindung wird nun anhand von Ausführungsbeispielen erläutert, die jedoch nicht den Schutzumfang begrenzen.

Es zeigt:
- Figur 1: eine perspektive Ansicht einer Federspannvorrichtung nach der Neuerung,
- Figur 2: eine Schraubenfeder, die in die Federspannvorrichtung eingespannt werden kann,
- Figur 3: eine Ansicht der Führungsplatte mit gelenkig eingebau ten Federhalterteilen,
- Figur 4: eine perspektive Ansicht von zwei Federhalterteilen, die direkt miteinander gelenkig verbunden sind,
- Figur 5: eine Draufsicht auf zwei Federhalterteile, die über ein Zwischenstück miteinander gelenkig und mit der Führungsplatte verbunden sind,
- Figur 6: eine perspektive Ansicht eines Federhalterteils mit Boh rungen zur Aufnahme für eine Spannklaue,
- Figur 7: eine perspektive Ansicht auf eine Spannklaue zur Auf nahme eines Schraubenfederdrahtes, vergrößert und
- Figur 8: eine perspektive Ansicht einer Spannklaue zur Aufnahme einer Schraubenfederabdeckung, vergrößert
- Figur 9: eine Abwandlung der Figur 5.

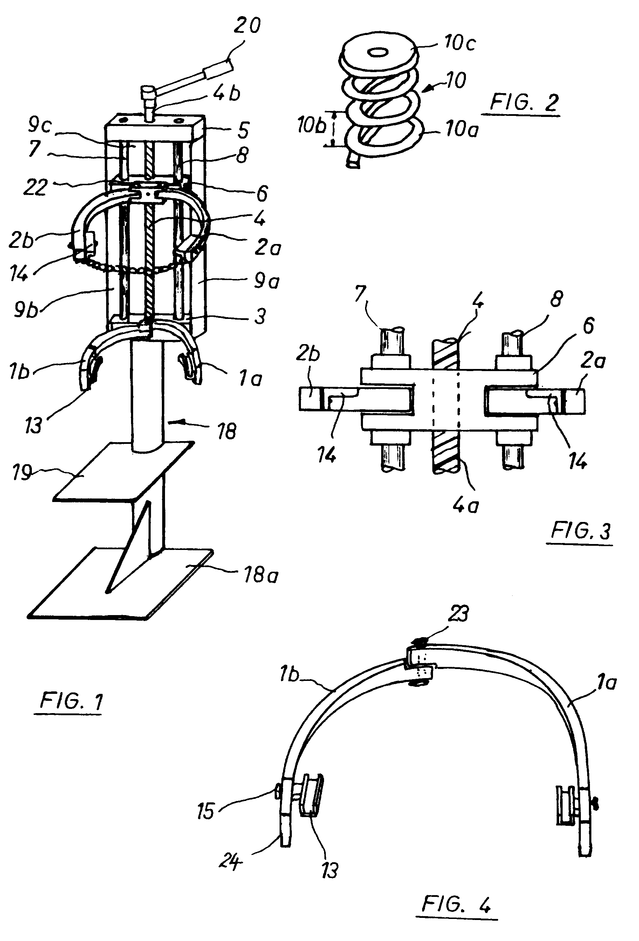

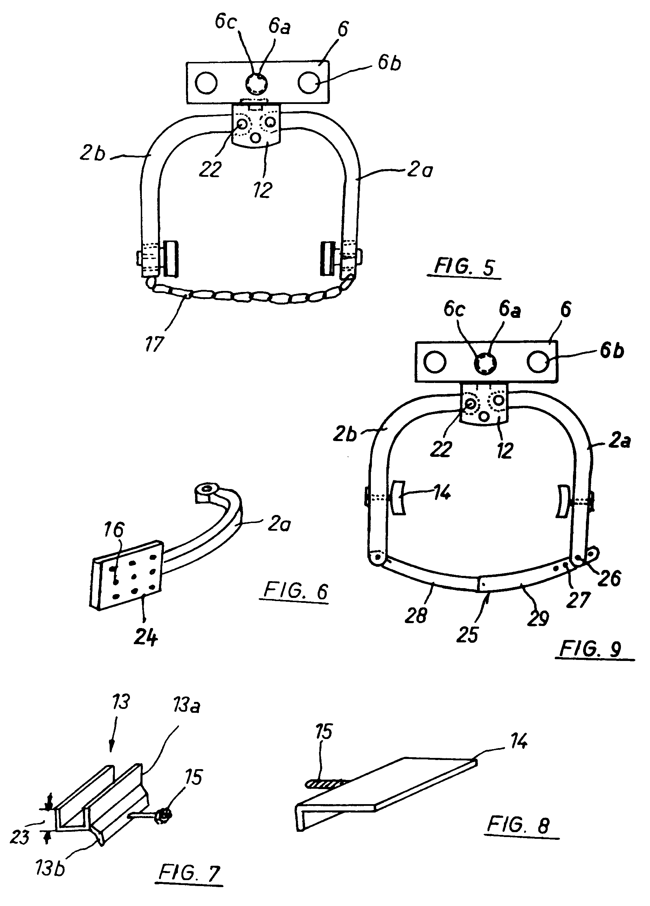

Die in Figur 1 dargestellte Federspannvorrichtung weist zwei Federhalter 1a, 1b; 2a, 2b zum Halten einer Schraubenfeder 10 (siehe Figur 2) auf. Während der untere Federhalter 1a, 1b unverschiebbar an einer Fußplatte 3 angebracht ist, kann der obere Federhalter 2a, 2b mittels einer Schraubspindel 4 gehoben und gesenkt werden, die in der Fußplatte 3 und in einer Deckenplatte 5 drehbar gelagert ist. Für sein Heben und Senken ist der obere Federhalter 2a, 2b mit einer Führungsplatte 6 versehen, die in einer Bohrung 6c ein Innengewinde 6a aufweist (siehe Figur 5), in das die Schraubspindel 4 mit ihrem Außengewinde 4a eingreift. Es kann dem Fachmann überlassen bleiben, welche Gewindeform für die Schraubspindel 4 gewählt wird. Zum Übertragen großer Kräfte und für eine lange Funktionsdauer hat sich ein vergütetes Trapezgewinde bewährt. Um die Schraubspindel 4 mit einem Drehwerkzeug 20 drehen zu können, weist sie eine z.B. aus der Deckenplatte 5 herausragende Verlängerung 4b auf, deren Ende für die Betätigung durch das Drehwerkzeug 20 entsprechend ausgebildet ist.

Um den oberen Federhalter 2a, 2b fluchtend mit dem unteren Federhalter zu heben und zu senken, weist die Federspannvorrichtung zwei Führungsstangen 7, 8 auf, die mit der Fußplatte 3 und der Deckenplatte 5 fest verbunden sein können und durch Aussparungen 6b der Führungsplatte 6 des oberen Federhalters 2a, 2b gleitend hindurchgehen (siehe Figur 3). Es besteht die Möglichkeit, an diesen Aussparungen 6b Gleitlager bekannter Art vorzusehen. Ferner ist es nicht erforderlich, die Aussparungen 6b als Bohrungen auszuführen, da sie bei Bedarf gabelförmig gestaltet sein können, um die Montage der Federspannvorrichtung zu vereinfachen.

Die Führungsstangen 7, 8 und die Schraubspindel 4 können durch Seitenwände 9a, 9b sowie eine Rückwand 9c abgedeckt sein, die mit der Fußplatte 3 und der Deckenplatte 5 fest verbunden sind. Dadurch ergibt sich ein stabiles Gehäuse für die Federspannvorrichtung, das gestattet, die Führungsstangen 7, 8 gegebenenfalls auch lose in Fußplatte 3 und Deckenplatte 5 anzuordnen. Anstelle von Seitenwänden 9a, 9b und Rückwand 9c kann das Gehäuse aus einem Rohr bestehen, das für das Heben und Senken des oberen Federhalters 2a, 2b einen entsprechend dimensionierten Schlitz aufweist.

Um die Federhalter 1a, 1b; 2a 2b dem Durchmesser der Schraubenfeder 10 anpassen zu können, sind sie in Umfangsrichtung geteilt ausgebildet und über Bolzen 22, 23 gelenkig befestigt. Insbesondere aus Montagegründen und zur Vereinfachung der Lagerhaltung sollten die Federhalterteile 1a, 1b bzw. 2a, 2b gleich lang sein. Dabei ist es prinzipiell unerheblich, ob die beiden Federhalterteile 1a, 1b bzw. 2a, 2b direkt (siehe Figur 4) oder über ein Zwischenstück 12 (siehe Figur 5) gelenkig miteinander verbunden sind. Die Federhalter 1a, 1b; 2a, 2b sind so bemessen, daß sie den Umfang der Schraubenfeder 10 mindestens 180° weit umfassen.

An den freien Enden der Federhalter 1a, 1b; 2a, 2b sind Spannklauen 13, 14 zur Aufnahme des Schraubenfederdrahtes 10a (siehe Figur 7) oder einer Schraubenfederabdeckung 10c (siehe Figur 2) vorgesehen. Die Spannklaue 13 zur Aufnahme des Schraubenfederdrahtes 10a ist im Querschnitt im wesentlichen U-förmig und in Längsrichtung bevorzugt gebogen ausgebildet. Die Spannklaue 13 wird am freien Ende eines Federhalterteiles 1a, 1b; 2a, 2b mit Befestigungselementen 15 einstellbar befestigt. Hierfür sind im Federhalterteil 1a, 1b; 2a, 2b beispielsweise Bohrungen 16 zur Aufnahme der Befestigungselemente 15 vorgesehen. Wenn die freien Enden der Federhalteteile 1a, 1b plattenartige Erweiterungen 24 in vertikaler Richtung zeigen, so sind vorteilhafterweise noch mehr Bohrungen 16 in Höhe und Länge zur unterschiedlichen Aufnahme der Spannklauen 13 in verschiedener Lage möglich. Jedoch können anstelle der Bohrungen 16 beliebig anders gestaltete Aussparungen für eine gegebenenfalls feinere Einstellbarkeit vorgesehen werden. Dies ist insbesondere für eine schwenkbare Einstellung der Spannklaue 13 zweckmäßig, um sie der Steigung der Schraubenfeder 10 besser anpassen zu können (siehe Figur 6).

Das Befestigungselement 15 ist entweder direkt mit dem (äußeren) freien Schenke 13a des U-förmigen Querschnitts der Spannklaue 13 oder an einem vom U-förmigen Querschnitt abgekröpften Abschnitt 13b der Spannklaue 13 verbunden. Die freien Schenkel im U-förmigen Querschnitt der Spannklaue 13 können so hoch ausgebildet sein, daß sie zur Aufnahme von mindestens zwei unterschiedlichen Steigungsbereichen einer entspannten Schraubenfeder 10 geeignet sind.

Anstelle der Spannklaue 13 kann bedarfsweise die L-förmig gestaltete Spannklaue 14 zur Aufnahme der Schraubenfederabdeckung 10c in gleicher Weise an einem Federhalterteil 1a, 1b; 2a, 2b befestigt werden.

Um ein Herausspringen der Schraubenfeder 10 aus der Federspannvorrichtung mit Sicherheit zu verhindern, ist ein die Schraubenfeder 10 umfassender Halteteil vorgesehen, der zwischen den freien Enden eines Federhalters 1a, 1b; 2a, 2b angeordnet ist und dabei die eingespannte Schraubenfeder 10 in ihrer Lage hält. Dieser Halteteil kann ein Schwenkarm 25 sein (Figur 9), der an dem einen freien Ende des Federhalters (1a, 1b; 2, 2b) gelenkig gehalten ist und an dem anderen freien Ende des Federhalters (1a, 1b, 2a, 2b) über ein Riegelteil 26 festlegbar ist. Damit ist der Federhalter 1a, 1b, 2a, 2b die Spiralfeder 10 umgreifend geschlossen. Für unterschiedlich breite Spiralfedern 10 läßt sich der Schwenkarm 25 auf Länge verändern und so auf die richtige Länge bringen. Ob hierbei ineinanderschiebbar geführte Teile (28, 29) oder in Reihe mehrere Befestigungslöcher 27 verwendet werden, mag dem Konstrukteur überlassen bleiben.

Als Alternative wird das Halteteil auch als Sicherheitskette 17 ausgebildet, die zwischen den freien Enden eines Federhalters 1a, 1b; 2a, 2b angeordnet ist. Die spezielle Ausbildung der Kette ist dem Fachmann überlassen. Um jedoch die Montage und Demontage der Schraubenfedern 10 in die bzw. aus der Spannvorrichtung zu erleichtern, sollte die Sicherheitskette 17 mindestens an ihrem einen Ende an das freie Ende des zugeordneten Federhalters 1a, 1b; 2a, 2b einhängbar sein, wenn in diesem Fall das andere Ende der Sicherheitskette 17 mit dem Federhalterende fest verbunden ist. Günstiger ist es jedoch, wenn beide Enden der Sicherheitskette 17 in die freien Enden eines zugeordneten Federhalters 1a, 1b; 2a, 2b einhängbar sind, da auf diese Weise die Sicherheitskette 17 unabhängig von Abnutzungserscheinungen verstellbar und einstellbar ist und gegebenenfalls leicht gegen eine neue Sicherheitskette 17 ausgetauscht werden kann.

Um die Federspannvorrichtung einsetzen zu können, muß sie in der Regel mit einer Stützenrichtung 18 verbunden werden. Die Art und Ausbildung der Verbindung zwischen Federspannvorrichtung und Stützeinrichtung 18 sollte dem Fachmann überlassen bleiben, der entscheidet, ob diese Verbindung wegen unterschiedlicher Einsatzmöglichkeiten austauschbar oder für dauernd festgelegt sein soll. So wird z.B. für eine Befestigung der Federspannvorrichtung im Schraubstock eine einfache rohrartige Verlängerung häufig ausreichen, während eine Betätigung der Federspannvorrichtung auf der Werkbank in der Regel einen Fuß 18a zum Aufstellen der Spannvorrichtung erfordert.

In manchen Fällen mag es zweckmäßig sein, zwischen dem Fuß 18a der Stützeinrichtung 18 und dem unteren Federhalter 1a, 1b ein Fangblech 19 zur Aufnahme eines von der Schraubenfeder 10 gehaltenen Bauteils vorzusehen, damit dieses beim eventuellen Herausfallen aus der Schraubenfeder nicht beschädigt wird.

Ganz allgemein sei vermerkt, daß drehbare und schwenkbare Bauteile der vorstehend beschriebenen Federspannvorrichtung in entsprechenden Lagern geführt werden sollten, um die Lebensdauer der Vorrichtung zu verlängern und die Kraft zur Betätigung zu verringern.

## Patentansprüche

1. Vorrichtung zum Spannen einer Schraubenfeder (10), insbesondere von Federbeinen, mit zwei an ihren Enden durch eine Fußplatte (3) einerseits und eine Deckenplatte (5) andererseits gehaltene Führungsstangen (7, 8), zwei axial miteinander fluchtenden Federhaltern (1a, 1b; 2a, 2b) und einer zwischen den beiden Führungsstangen (7, 8) angeordneten Schraubspindel (4), mit der die Federhalter (1a, 1b; 2a, 2b) in ihrem Abstand zueinander verstellbar sind, wobei zumindest einer der Federhalter (2a, 2b) über eine Führungsplatte (6) an den Führungsstangen (7, 8) verschiebbar geführt ist, und die Federhalter (1a, 1b; 2a, 2b) den Umfang der zwischen ihnen eingespannten Schraubenfeder (10) mindestens 180° weit umfassen und mindestens einer der Federhalter (1a, 1b; 2a, 2b) sich der Federsteigung (10b) anpaßt, **dadurch gekennzeichnet**, daß die Schraubspindel (4) drehbar ist und in eine zwischen den beiden Führungsstangen (7, 8) vorgesehene mit einem Innengewinde (6a) ausgestattete Bohrung (6c) der Führungsplatte (6) eingreift, und die Federhalter (1a, 1b; 2a, 2b) in Umfangsrichtung gelenkig verbunde Teile (1a, 1b; 2a, 2b) aufweisen.

2. Federspannvorrichtung nach Anspruch 1, **dadurch gekennzeichnet**, daß die Schraubspindel (4) mittig zwischen den beiden Führungsstangen (7, 8) angeordnet ist.

3. Federspannvorrichtung nach Anspruch 1 oder 2, **dadurch gekennzeichnet**, daß die Schraubspindel (4) eine aus der Fußplatte (3) oder der Deckenplatte (5) herausragende Verlängerung (4b) aufweist, die zur Aufnahme eines Drehwerkzeugs (20) ausgebildet ist.

4. Federspannvorrichtung nach Anspruch 1, **dadurch gekennzeichnet**, daß der Federhalter (1a, 1b; 2a, 2b) in Umfangsrichtung in zwei gleich lange Teile (1a/1b; 2a/2b) geteilt ist.

5. Federspannvorrichtung nach Anspruch 1 oder 4, **dadurch gekennzeichnet**, daß die beiden Teile (1a/1b; 2a/2b) des Federhalters (1a, 1b; 2a, 2b) über ein Zwischenstück (12) gelenkig miteinander verbunden sind.

6. Federspannvorrichtung nach einem der Ansprüche 1 bis 5, **dadurch gekennzeichnet**, daß die Federhalter (1a, 1b; 2a, 2b) Spannklauen (13, 14) zur Aufnahme des Federdrahtes (10a) bzw. der Schraubenfederabdeckung (10c) aufweisen.

7. Federspannvorrichtung nach Anspruch 6, **dadurch gekennzeichnet**, daß die Spannklauen (13) mindestens eines Federhalters (1a, 1b; 2a, 2b) so weit schwenkbar angeordnet sind, daß sie sich der Steigung (10b) der Schraubenfeder (10) anpassen können.

8. Federspannvorrichtung nach Anspruch 6 oder 7, **dadurch gekennzeichnet**, daß mindestens ein Federhalter (1a/1b, 2a/2b) an seinen freien Enden der Teile (1a/1b, 2a/2b) eine plattenartige Erweiterung (24) in vertikaler Richtung mit mehrfacher Aufnahme, bevorzugt Bohrungen (16), in Höhe und Länge für die Spannklauen (13, 14) aufweisen.

9. Federspannvorrichtung nach mindestens einem der Ansprüche 6 bis 8, **dadurch gekennzeichnet**, daß die Spannklauen (13, 14) mindestens eines Federhalters (1a, 1b; 2a, 2b) in Umfangsrichtung und/oder Höhe der einzuspannenden Schraubenfeder (10) verstellbar angebracht sind.

10. Federspannvorrichtung nach einem der Ansprüche 6 bis 9, **dadurch gekennzeichnet**, daß die Spannklauen (13) mindestens eines Federhalters (1a, 1b; 2a, 2b) einen U-förmigen Querschnitt zur Aufnahme des Federdrahtes (10a) aufweisen.

11. Federspannvorrichtung nach einem der Ansprüche 1 bis 10, **dadurch gekennzeichnet**, daß mindestens der verschiebbare Federhalter (2a, 2b) zur Sicherung der aufgenommenen Schraubenfeder (10) einen umfassenden Halteteil aufweist.

12. Federspannvorrichtung nach Anspruch 11, **dadurch gekennzeichnet**, daß der Halteteil ein die freien Enden des Federhalters (2a, 2b) verbindender aufklappbarer, stegartiger Arm (25) ist.

13. Federspannvorrichtung nach Anspruch 11, **dadurch gekennzeichnet**, daß der Halteteil eine die freien Enden des Federhalters (2a, 2b) verbinde, lösbare Sicherheitskette (17) ist.

14. Federspannvorrichtung nach Anspruch 13, **dadurch gekennzeichnet**, daß die Sicherheitskette (17) mindestens an ihrem einen Ende an das freie Ende des zugeordneten Federhalters (1a, 1b; 2a, 2b) einhängbar ist.

15. Federspannvorrichtung nach Anspruch 13 oder 14, **dadurch gekennzeichnet**, daß die Nutzlänge der Sicherheitskette (17) einstell- und verstellbar ist.

16. Federspannvorrichtung nach einem der Ansprüche 1 bis 15, **dadurch gekennzeichnet**, daß sie in Achsrichtung durch eine Stützeinrichtung (18) zum Befestigen z.B. in einem Schraubstock verlängert ist.

17. Federspannvorrichtung nach Anspruch 16, **dadurch gekennzeichnet**, daß die Stützeinrichtung (18) an ihrem freien Ende einen Fuß (18a) zum Aufstellen der Spannvorrichtung aufweist.

18. Federspannvorrichtung nach Anspruch 16 oder 17, **dadurch gekennzeichnet**, daß die Stützeinrichtung (18) zwischen ihrem Fuß (18a) und dem unteren Federhalter (1a, 1b) ein Fangblech (19) zur Aufnahme eines von der Schraubenfeder (10) gehaltenen Bauteils aufweist.

## Claims

1. A device for tensioning a helical spring (10), in particular of shock absorbing strut units, with two guide rods (7, 8) held at their ends by a base plate (3) on the one hand, and a top plate (5) on the other hand, two spring holders (1a, 1b; 2a, 2b) axially aligned with each other, and a screw spindle (4) arranged between the two guide rods (7, 8), by means of which the interspacing of the spring holders (1a, 1b; 2a, 2b) is adjustable with respect to each other, wherein at least one of the spring holders (2a, 2b) is carried for displacement on the guide rods (7, 8) by means of a guide plate (6), and the spring holders (1a, 1b; 2a, 2b) surround the circumference of the helical springs (10) inserted between them at least over 180°, and at least one of the spring holders (1a, 1b; 2a, 2b) adjusts to the spring lead (10b), **characterized in that** the screw spindle (4) is rotatable and engages in a bore (6c) of the guide plate (6) provided between the two guide rods (7, 8) and fitted with an internal thread (6a), and that the spring holders (1a, 1b; 2a, 2b) have parts (1a, 1b; 2a, 2b) articulated in the circumferential direction.

2. A spring tensioning deVice according to claim 1, **characterized in that** the screw spindle (4) is arranged centrally between the two guide rods (7, 8).

3. A spring tensioning device according to claim 1 or 2, **characterized in that** the screw spindle (4) has an extension (4b) projecting from the base plate (3) or the top plate (5), which extension is designed for receiving a turning tool (20).

4. A spring tensioning device according to claim 1, **characterized in that** the spring holder (1a, 1b; 2a, 2b) is divided in the circumferential direction into two equally long parts (1a/1b; 2a/2b).

5. A spring tensioning device according to claim 1 or 4, **characterized in that** the two parts (1a/1b; 2a/2b) of the spring holder (1a, 1b; 2a, 2b) are articulated to each other by means of an intermediate part (12).

6. A spring tensioning device according to one of claims 1 to 5, **characterized in that** the spring holders (1a, 1b; 2a, 2b) have clamping claws (13, 14) for receiving the spring wire (10a) or the helical spring cover (10c).

7. A spring tensioning device according to claim 6, **characterized in that** the clamping claws (13) of at least one spring holder (1a, 1b; 2a, 2b) are arranged to be pivotable to such an extent that they are capable of adjusting to the lead (10b) of the helical spring (10).

8. A spring tensioning device according to claim 6 or 7, **characterized in that** at least one spring holder (1a, 1b; 2a, 2b) has at the free ends of the parts 1a/1b; 2a/2b) a plate-type extension (24) in the vertical direction with multiple receiving means, preferably bores (16), over its height and length for the clamping claws (13, 14).

9. A spring tensioning device according to at least one of claims 6 to 8, **characterized in that** the clamping claws (13, 14) of at least one spring holder (1a, 1b; 2a, 2b) are arranged with scope for adjustment in the circumferential direction and/or the height of the helical spring (10) to be inserted.

10. A spring tensioning device according to one of claims 6 to 9, **characterized in that** the clamping claws (13) of at least one spring holder (1a, 1b; 2a, 2b) have a U-shaped cross-section for receiving the spring wire (10a).

11. A spring tensioning device according to one of claims 1 to 10, **characterized in that** at least the displaceable spring holder (2a, 2b) has an enclosing holding part, for securing the helical spring (10) received.

12. A spring tensioning device according to claim 11, **characterized in that** the holding part is a folding bridge-type arm (25) that connects the free ends of the spring holders (2a, 2b).

13. A spring tensioning device according to claim 11, **characterized in that** the holding part is a detachable safety chain (17) that connects the free ends of the spring holder (2a, 2b).

14. A spring tensioning device according to claim 13, **characterized in that** the safety chain (17) can be inserted at at least one of its ends at the free end of the associated spring holder (1a, 1b; 2a, 2b).

15. A spring tensioning device according to claim 13 or 14, **characterized in that** the effective length of the detachable safety chain (17) can be set and adjusted.

16. A spring tensioning device according to one of claims 1 to 15, **characterized in that** it is extended in the axial direction by a supporting device (18), for being fastened, for example in a vice.

17. A spring tensioning device according to claim 16, **characterized in that** the supporting device (18) has at its free end a foot (18a) for the upright positioning of the tensioning device.

18. A spring tensioning device according to claim 16 or 17, **characterized in that** the supporting device (18) has between its foot (18a) and the lower spring holder (1a, 1b) a holding plate (19) for accommodating a component held by the helical spring (10).

## Revendications

1. Appareil de tension d'un ressort hélicoïdal (10), en particulier de jambes de force à ressort, comportant deux tiges de guidage (7, 8) tenues à une extrémité par une plaque d'assise (3) et à l'autre extrémité par une plaque de couverture (5), deux supports de ressort (1a, 1b ; 2a, 2b) alignés axialement et une tige filetée (4) placée entre les deux tiges de guidage (7, 8) qui permet de faire varier la distance entre les supports de ressort (1a, 1b ; 2a, 2b), au moins un des supports de ressort (2a, 2b) étant monté mobile sur les tiges de guidage (7, 8) par l'intermédiaire d'une plaque de guidage (6), les supports de ressort (1a, 1b ; 2a, 2b) embrassant sur au moins 180° le pourtour du ressort hélicoïdal (10) placé entre eux, et au moins un des supports de ressort (1a, 1b ; 2a, 2b) s'adaptant au pas (10b) du ressort, caractérisé par le fait que la tige filetée (4) est tournante et engagée dans un trou (6c) de la plaque de guidage (6) prévu entre les deux tiges de guidage (7, 8) et pourvu d'un filetage intérieur (6a), et les supports de ressort (1a, 1b ; 2a, 2b) présentent dans la direction circonférentielle des parties jointes de manière articulée (1a, 1b ; 2a, 2b).

2. Appareil de tension de ressort selon la revendication 1, caractérisé par le fait que la tige filetée (4) est placée au milieu entre les deux tiges de guidage (7, 8).

3. Appareil de tension de ressort selon l'une des revendications 1 et 2, caractérisé par le fait que la tige filetée (4) présente une rallonge (4b) qui fait saillie de la plaque d'assise (3) ou de la plaque de couverture (5) et est faite pour recevoir un outil de rotation (20).

4. Appareil de tension de ressort selon la revendication 1, caractérisé par le fait que le support de ressort (1a, 1b ; 2a, 2b) est divisé dans la direction circonférentielle en deux parties de même longueur (1a/1b ; 2a/2b).

5. Appareil de tension de ressort selon l'une des revendications 1 et 4, caractérisé par le fait que les deux parties (1a/1b ; 2a/2b) du support de ressort (1a, 1b ; 2a, 2b) sont jointes de manière articulée par une pièce intermédiaire (12).

6. Appareil de tension de ressort selon l'une des revendications 1 à 5, caractérisé par le fait que les supports de ressort (1a, 1b ; 2a, 2b) présentent des griffes de tension (13, 14) destinées à recevoir le fil de ressort (10a) ou la couverture (10c) du ressort hélicoïdal.

7. Appareil de tension de ressort selon la revendication 6, caractérisé par le fait que les griffes de tension (13) d'au moins un support de ressort (1a, 1b ; 2a, 2b) sont montées basculantes de façon à pouvoir s'adapter au pas (10b) du ressort hélicoïdal (10).

8. Appareil de tension de ressort selon l'une des revendications 6 et 7, caractérisé par le fait qu'au moins un support de ressort (1a, 1b ; 2a, 2b) présente aux extrémités libres de ses parties (1a/1b ; 2a, 2b) un élargissement du genre plaque (24) dans la direction verticale pourvu d'un récepteur multiple, de préférence de trous (16), en hauteur et en longueur pour les griffes de tension (13, 14).

9. Appareil de tension de ressort selon au moins une des revendications 6 à 8, caractérisé par le fait que les griffes de tension (13, 14) d'au moins un support de ressort (1a, 1b ; 2a, 2b) sont montées mobiles dans la direction circonférentielle et/ou la direction de la hauteur du ressort hélicoïdal (10) à monter.

10. Appareil de tension de ressort selon l'une des revendications 6 à 9, caractérisé par le fait que les griffes de tension (13) d'au moins un support de ressort (1a, 1b ; 2a, 2b) ont une section en forme de U pour recevoir le fil de ressort (10a).

11. Appareil de tension de ressort selon l'une des revendications 1 à 10, caractérisé par le fait qu'au moins le support de ressort mobile (2a, 2b) présente une partie de retenue enveloppante pour le blocage du ressort hélicoïdal (10) monté.

12. Appareil de tension de ressort selon la revendication 11, caractérisé par le fait que la partie de retenue est un bras ouvrant du genre bride (25) qui réunit les extrémités libres du support de ressort (2a, 2b).

13. Appareil de tension de ressort selon la revendication 11, caractérisé par le fait que la partie de retenue est une chaîne de sécurité détachable (17) qui réunit les extrémités libres du support de ressort (2a, 2b).

14. Appareil de tension de ressort selon la revendication 13, caractérisé par le fait que la chaîne de sécurité (17) peut être accrochée au moins à une extrémité à l'extrémité libre du support de ressort associé (1a, 1b ; 2a, 2b).

15. Appareil de tension de ressort selon l'une des revendications 13 et 14, caractérisé par le fait que la longueur utile de la chaîne de sécurité (17) est réglable.

16. Appareil de tension de ressort selon l'une des revendications 1 à 15, caractérisé par le fait qu'il est rallongé dans la direction axiale par un dispositif d'appui (18) pour sa fixation par exemple dans un étau.

17. Appareil de tension de ressort selon la revendication 16, caractérisé par le fait que le dispositif d'appui (18) présente à son extrémité libre un pied (18a) pour l'installation de l'appareil de tension.

18. Appareil de tension de ressort selon l'une des revendications 16 et 17, caractérisé par le fait que le dispositif d'appui (18) présente entre son pied (18a) et le support de ressort inférieur (1a, 1b) une plaque d'arrêt (19) destinée à recevoir un élément tenu par le ressort hélicoïdal (10).
